Europäisches Patentamt

European Patent Office

Office européen des brevets

(19)

(11) Numéro de publication: **0 235 057 B1**

(12) **FASCICULE DE BREVET EUROPEEN**

(45) Date de publication du fascicule du brevet:
17.01.90

(51) Int. Cl.⁴: **G11B 5/64, B32B 27/36**

(21) Numéro de dépôt: **87420043.9**

(22) Date de dépôt: **12.02.87**

(54) **Films composites polyester transparents utilisables notamment pour l'obtention de films métallisés à haute brillance.**

(30) Priorité: **14.02.86 FR 8602207**

(43) Date de publication de la demande:
**02.09.87 Bulletin 87/36**

(45) Mention de la délivrance du brevet:
**17.01.90 Bulletin 90/3**

(84) Etats contractants désignés:
**AT BE DE ES FR GB IT LU NL**

(56) Documents cités:
**EP-A- 0 088 634
EP-A- 0 162 788

PATENT ABSTRACTS OF JAPAN,
vol. 6, no. 84 (P-117)[962], 22 mai 1982; &
JP-A-57 22 235 (DAIAFOIL K.K.) 05-02-1982**

(73) Titulaire: **RHONE-POULENC FILMS, 25, quai Paul Doumer, F-92408 Courbevoie(FR)**

(72) Inventeur: **Miquel, Huguette, 6, rue des Platanes, F-69360 Chaponost(FR)**
Inventeur: **Eyraud, Marcel, 7, due des Noyers, F-69005 Lyon(FR)**

(74) Mandataire: **Rioufrays, Roger et al, RHONE-POULENC INTERSERVICES Service Brevets Chimie Centre de Recherches de Saint-Fons B.P. 62, F-69192 Saint-Fons Cédex(FR)**

## Description

La présente invention concerne des films composites multicouches ayant une excellente transparence, une bonne machinabilité et conduisant après métallisation à des films à brillance élevée.

On a déjà proposé des films thermoplastiques tels que des films polyesters destinés à la métallistion et conduisant après métallisation à des films utilisables notamment comme surfaces réfléchissantes à hautes performances. Ces films doivent avoir une rugosité de surface très faible sur la face métallisable, afin d'obtenir d'excellentes propriétés réflectives de la couche de métal ; la nécessité d'avoir une rugosité de surface très faible entraîne cependant des difficultés sérieuses lors de l'enroulement de film sur les machines industrielles : la machinabilité du film (aptitude du film à être enroulé de manière satisfaisante à grande vitesse sur les machines industrielles) demande à être améliorée.

On a ainsi proposé d'utiliser des films contenant une faible quantité de très fines particules ; ces films ne possèdent donc pas une transparence maximale et de ce fait ont un pourcentage de lumière dispersée relativement élevé : les films métallisés qui en résultent ne peuvent alors être utilisés dans l'application surface réfléchissante que du côté de la face métallisée qu'il est cependant nécessaire de protéger par dépôt d'un vernis protecteur. Ces films présentent globalement une machinabilité insuffisante, nécessitent la présence d'un vernis protecteur sur la couche métallisée et ne peuvent pas, dans certains cas, être utilisés comme films réflecteurs lorsque le réflection s'effectue au travers de la couche non métallisée du film. Autrement dit, dans ces applications, il faut souligner qu'on ne peut pas utiliser à titre de couche protectrice du film métallisé, le film lui-même.

Ont été également recommandés, pour utilisation en application surface réfléchissante, des films polyesters non chargés sur lesquels on a déposé, avant métallisation et entre les étirages, un dépôt de très fines particules de silice. Ces films ont un pourcentage de lumière dispersée très faible et donc de ce fait une bonne transparence, mais une machinabilité insuffisante. Par ailleurs, la résistance à l'abrasion est faible. De tels films sont décrits dans le brevet français 2 178 119.

On a également proposé l'emploi de films coextrudés constitués de deux couches étirées, l'une étant chargée et amenant les propriétés de glissant (machinabilité), l'autre n'étant pas chargée et ayant donc une surface à très faible rugosité et destinée à recevoir la couche métallisée brillante. Les films métallisés coextrudés possèderont obligatoirement un vernis protecteur déposé ultérieurement sur la couche métallisée. De tels films, qui ne sont pas par ailleurs totalement transparents et qui possèdent un pourcentage de lumière dispersée relativement élevé, sont par exemple décrits dans le brevet américain 4 307 150; l'utilisation d'un vernis protecteur offre l'inconvénient d'exiger une opération industrielle supplémentaire et de réduire la brillance du film, mais ce dépôt est rendu nécessaire par le fait que l'on ne peut pas utiliser, en tant que couche protectrice, la couche non métallisée du film puisque celle-ci, chargée n'a pas les qualités de transparence requises.

Il n'existe donc pas à ce jour des films ayant simultanément une excellente transparence, une rugosité de surface faible, une bonne machinabilité, une bonne résistance à l'abrasion et conduisant après métallisation à des films ayant une brillance élevée. Il se posait donc le problème de réaliser de tels films. L'invention répond précisément à ce but et apporte dans le domaine des films composites une solution au problème précédent.

Plus précisément, un des objets de la présente invention est constitué par des films composites thermoplastiques transparents, étirés, à faible rugosité de surface, constitués par une couche centrale (A) essentiellement non chargée et recouverte sur au moins une de ses faces par une couche (B) chargée contenant de fines particules à l'état dispersé, le film étant caractérisé en ce que ladite couche B contient de 0,1 à 1% en poids de particules ayant un diamètre médian en volume compris entre 0,6 et 1,5 µm et présente une épaisseur au plus égale à 3 micromètres et qu'il possède l'ensemble des propriétés suivantes:

 – pourcentage de lumière dispersée <1
 – rugosité totale des faces externes $R_T$ <0,15
 – coefficient de friction film sur film mesuré en régime dynamique et statique tel que:

$\mu_S$ < 0,6 (régime statique)

$\mu_d$ < 0,5 (régime dynamique)

Les films composites de la présente invention conduisent, dans les conditions habituelles de métallisation, à des films métallisés ayant une brillance particulièrement élevée que l'on peut observer directement ou indirectement à travers la partie transparente, celle-ci jouant le rôle de revêtement protecteur.

Dans le cadre de l'invention, et c'est ce qui constitue un autre objet de la présente invention, les films composites présentent les caractéristiques suivantes:

 – poucentage de lumière dispersée ≤ 0,8
 – rugosité $R_T$ ≤ 0,12

Les films composites de la présente invention peuvent être des films dits minces, dont l'épaisseur est habituellement comprise entre 5 et 50 micromètres et des films dit épais, dont l'épaisseur est supérieure à 50 micromètres et inférieure ou égale à 200 micromètres.

La transparence et donc la valeur du pourcentage de lumière dispersée du film (soit y) sont évidemment fonction de l'épaisseur x du film.

Les films, tels que précédemment définis, et dont le pourcentage de lumière dispersée satisfait à l'iné-quation suivante:

$$y \leqslant \frac{x}{400} + 0,5 \quad \text{(x en micromètres)}$$

et préférentiellement à l'inéquation suivante:

$$y \leqslant \frac{x}{500} + 0,4$$

constituent un objet préférentiel de la présente invention.

Un autre objet de la présente invention réside dans un procédé de préparation de films composites thermoplastiques polyester transparents étirés, à faible rugosité de surface, constitués par une couche centrale (A) essentiellement non chargée et recouverte, sur au moins une de ses faces, par une couche (B) chargée contenant de fines particules à l'état dispersé possédant l'ensemble des propriétés suivantes:

- pourcentage de lumière dispersée < 1
- rugosité totale des faces externes $R_T$ < 0,15
- coefficient de friction film sur film mesuré en régime dynamique et statique tel que :
$\mu_S$ < 0,6 (régime statique)
$\mu_d$ < 0,5 (régime dynamique)

caractérisé en ce que l'on procède à la coextrusion d'un polyester thermoplastique cristallisable contenant moins de 0,01 % en poids de charges pour former une couche A amorphe et d'un polyester thermoplastique cristallisable contenant de 0,1 à 1 % en poids d'au moins une charge dont les particules ont un diamètre médian en volume compris entre 0,6 et 1,5 micromètres, sous forme d'une couche B amorphe, déposée sur au moins une des faces de la couche A, l'épaisseur de la couche B étant au plus égale à 3 micromètres, puis que l'on procède à l'étirage du film composite amorphe dans au moins une direction et à la thermofixation du films étiré.

Les films de l'invention comprennent au moins une couche externe (B) remarquable, en ce sens, qu'elle contient à l'état dispersé de fines particules ayant des dimensions caractéristiques et utilisées en quantités caractéristiques.

C'est en effet un choix particulier de charge qui permet d'induire au niveau du film métallisé un compromis intéressant entre les propriétés de transparence, de machinabilité, de pourcentage de lumière dispersée et de brillance.

Il a en effet été constaté que des films ayant au moins une couche (B) et contenant de 0,1 à 1 % en poids de particules ayant un diamètre médian en volume compris entre 0,6 et 1,5 micromètre, l'épaisseur de la couche (B) étant au plus égale à 3 micromètres, convenaient bien dans le cadre de la présente invention. Ces films constituent donc un autre objet de la présente invention ; préférentiellement l'épaisseur de la couche B est au plus égale à 1,5 micromètre et est avantageusement comprise entre 0,3 et 0,8 micromètre.

Selon une variante avantageuse de la présente invention, les particules présentes dans la couche (B) ont un diamètre médian en volume compris entre 0,6 et 1 micromètre.

Avantageusement, dans le domaine des films minces, la couche (B) contient de 0,3 à 1 % en poids de charge dont le diamètre médian en volume est compris 0,6 et 1 micromètre, alors que l'épaisseur de la couche (B) est inférieure à 1,5 micromètres.

Les particules présentes dans les couches (B) peuvent correspondre à de fines particules introduites dans la composition polymérique et/ou à des particules provenant de résidus catalytiques ou d'adjuvants de précipitation. Préférentiellement la rugosité est apportée par introduction de fines particules inertes dans la composition polymérique conduisant après étirage à la couche (B).

La nature des particules inertes ajoutées dans la couche (B) peut être très variée : il peut s'agir de particules minérales (oxydes ou sels des éléments des groupes II, III et IV de la classification périodique des éléments) ou encore de particules polymériques. A titre illustratif, on peut citer parmi les charges utilisables : la silice, les silicoaluminates, le carbonate de calcium, MgO, $Al_2O_3$, $BaSO_4$, $TiO_2$ ... Avanta-geusement, on utilisera à titre de charge du carbonate de calcium naturel ou synthétique.

Lorsque les films de la présente invention comprennent deux couches (B) en tant que faces extérieures, ces deux couches (B) peuvent, dans le cadre précédemment défini, différer entre elles par la quantité de fines particules présentes, par le diamètre médian en volume de ces particules, ou encore par l'épaisseur de la couche ; selon une variante préférentielle, les deux couches (B) sont identiques.

La couche (A) constituant la couche centrale des films composites de la présente invention est préférentiellement une couche ne contenant pas de fines particules susceptibles d'influer sur le pourcentage de lumière dispersée et/ou sur la rugosité de surface. Il est cependant possible, notamment dans le cas de recyclage d'une partie des films de la présente invention, lors de la préparation d'un nouveau lot de films, d'utiliser en tant que composition polymérique destinée à engendrer la couche (A), une composition contenant au plus 100 ppm de charge susceptible d'influer sur le pourcentage de lumière dispersée et/ou sur la rugosité de surface.

Les films de la présente invention sont remarquables en ce sens qu'ils présentent également une excellente résistance à l'abrasion. Ce résultat est observé notamment dans le cadre des films dits minces.

La mise en évidence de la résistance à l'abrasion est commodément établie en mesurant les valeurs du coefficient de frottement film sur métal durant le déroulement du film. Ce coefficient appelé $\mu_k$ correspond à une friction du film passant à vitesse lente sur des rouleaux ou galets métalliques fixes. Le coefficient $\mu_k$ voit sa valeur se stabiliser en général après le passage d'un certain nombre de mètres de bande: le coefficient $\mu_k$ est en pratique stabilisé après 10 m de défilement de la bande. C'est pourquoi on mesure le $\mu_k$ à l'instant initial $[(\mu_k)_0]$ et après défilement de 10 m et 400 m de bande $[(\mu_k)_{10}]$ et $[(\mu_k)_{400}]$ ; la méthode de mesure sera définie plus loin.

Lorsque le film résiste à l'abrasion, on constate que la valeur du $\mu_k$ demeure pratiquement constante durant le défilement de la bande : l'élévation du $\mu_k$ avec la quantité de bande défilée constitue donc une mesure de la résistance du film à l'abrasion.

Par ailleurs, l'apparition de poudre ou poussière sur le galet durant le défilement du film constitue un test commode pour estimer l'abrasion.

Les films de la présente invention sont remarquables en ce sens qu'ils présentent une variation faible du $\mu_k$ durant le défilement du film. Cette variation dénommée $\Delta\mu_k$ est caractérisée de la manière suivante:

$$\Delta\mu_k = \frac{(\mu_k)_{400} - (\mu_k)_{10}}{(\mu_k)_{10}} \times 100 \leqslant 40$$

préférentiellement la valeur du $\Delta\mu_k$ est au plus égale à 25.

Les films composites de la présente invention sont avantageusement des films polyesters composites qui sont constitués, tant dans la couche (A) que dans les couches (B), de polyester cristallin ou semi-cristallin.

La description qui va suivre va être axée sur les films polyesters : ceux-ci sont obtenus à partir de polyesters connus par eux-mêmes, ayant après les traitements usuels d'extrusion, d'étirage et de thermofixation des propriétés mécaniques satisfaisantes leur permettant de jouer le rôle d'un film support (module élevé, stabilité dimensionnelle ...) ; les polyesters peuvent être tout polyester filmogène linéaire ou essentiellement linéaire conduisant à des polyesters cristallins ou semi-cristallins et tels qu'obtenus à partir d'un ou de plusieurs diacide(s) carboxylique(s) ou de leurs esters d'alkyle inférieur (acide téréphtalique, acide isophtalique, acide naphtalènedicarboxylique-2,5, acide naphtalènedicarboxylique-2,6, acide naphtalènedicarboxylique-2,7, acide succinique, acide sébacique, acide adipique, acide azélaïque, acide diphényldicarboxylique et acide hexahydrotéréphtalique) et d'un ou plusieurs diols ou polyols comme l'éthylèneglycol, le propanediol-1,3, le butanediol-1,4, le néopentylglycol et le cyclohexanediméthanol-1,4, les polyoxyalkylèneglycol (polyoxyéthylèneglycol, polyoxypropylèneglycol ou leurs copolymères statistiques ou séquencés).

Généralement, les polyesters utilisés sont des homopolymères ou des copolymères comportant essentiellement des motifs téréphtaliques d'alkylène ; de préférence lesdits polyesters comportent au moins 80 % en poids de motifs téréphtalate d'éthylèneglycol et, plus préférentiellement encore, au moins 90 % en poids de tels motifs. Le polyester peut être également un mélange de plusieurs polycondensats dont 80 % en poids et de préférence 90 % en poids sont du polytéréphtalate d'éthylèneglycol.

Avantageusement, le polyester est un polytéréphtalate d'étylèneglycol dont la viscosité intrinsèque VI mesurée à 25°C dans l'o-chlorophénol est comprise entre 0,6 et 0,75 dl/g.

La préparation de tels polyesters est connue en soi. Les catalyseurs, stabilisants et additifs mis en oeuvre dans le cadre de la présente invention ne sont pas critiques.

L'évidence de l'aptitude à la cristallisation ou de la cristallinité des polymères est révélée par tout moyen bien connu du spécialiste comme par exemple par analyse thermique différentielle où l'on met en évidence des pics de fusion cristalline. Dans ce contexte on peut se référer à l'article de S.H. LIN et J.L. KOENIG dans Journal of Polymer Science Symposium 71, 121-135 (1984) ; le taux de cristallinité de la couche de polymère dans le film croit avec l'élévation de la surface du pic observé en analyse thermique différentielle et est évidemment fonction de la nature du polymère et des traitements physiques (étirage ...) et/ou thermiques qu'il a subi (thermofixation).

Le test de densité (variation importante de la densité) permet également de vérifier de manière simple si le polyester est à l'état cristallin ou semi-cristallin.

Les films composites de la présente invention peuvent être obtenus par des procédés variés conventionnels. Par simplification, l'exposé va être axé par souci de clarté sur l'obtention de films coextrudés conduisant à un film amorphe devenant cristallin ou semi-cristallin après étirage. Ainsi les films, tels que les films polyesters, sont obtenus avantageusement par coextrusion en alimentant une filière multicanaux ou une boite de répartition, d'une part avec un polyester non chargé conduisant à des films amorphes devenant cristallin ou semi-cristallin, après avoir été soumis à un traitement d'étirage puis à un traitement de thermofixation, et d'autre part avec un polyester chargé devenant cristallin ou semi-cristallin après étirage et thermofixation.

L'étirage, dans le cadre de la présente invention, consiste au moins en un étirage monodirectionnel effectué sur un film amorphe composite, de manière à conférer au film un ensemble satisfaisant de propriétés mécaniques (modules élevés, bonne stabilité dimensionnelle ...) Il peut donc s'agir d'un monoétirage ou d'un biétirage effectué successivement ou simultanément dans deux directions en général orthogonales, ou encore de séquences d'au moins 3 étirages où la direction d'étirage est changée à chaque séquence. Par ailleurs, chaque étirage monodirectionnel peut lui-même être effectué en plusieurs étapes. On pourra ainsi associer des séquences d'étirage comme par exemple deux traitements successifs de biétirage, chaque étirage pouvant être effectué en plusieurs phases.

Enfin selon une variante avantageuse de la présente invention, les films tels que précédemment définis ont subi un traitement de biétirage dans deux directions orthogonales entre elles.

Plus précisément, l'étirage peut être effectué de manière successive tout d'abord dans la direction de la machine (étirage longitudinal), puis perpendiculairement à la direction de celle-ci (étirage transversal) ou inversement, c'est-à-dire que l'on effectue alors un étirage transversal suivi d'un étirage longitudinal. Les données qui vont suivre se rapportent plus spécialement aux polytéréphtalates d'alkylèneglycol et notamment au polytéréphtalate d'éthylèneglycol.

Généralement, pour ce dernier, l'étirage longitudinal est effectué à un taux de 3 à 5 (c'est-à-dire que la longueur du film étiré représente de 3 à 5 fois la longueur du film amorphe) et à une température de 80 à 100°C pour le polyester et l'étirage transversal est effectué avec un taux de 3 à 5, à une température de 90 à 120°C.

L'étirage peut également être effectué de manière simultanée, c'est-à-dire simultanément dans le sens longitudinal et dans le sens transversal, par exemple avec des taux de 3 à 5 et à une température de 80 à 120°C.

Selon le choix des conditions d'étirage il est possible de générer des morphologies particulières de surface, telles que la présence de cavités entourant une protubérance. Cette possibilité de générer des morphologies particulières dépend en outre du choix du polymère et de ses adjuvants.

Les films composites de la présente invention peuvent être utilisés dans des domaines variés comme par exemple dans le domaine magnétique (fabrication de bandes et de matériaux magnétiques, notamment à usage vidéo, après dépôt d'enduit magnétique ou de films très minces de matériau ferromagnétique ...). Ils sont également particulièrement intéressants pour l'obtention de films métallisés. Cette utilisation constitue également un objet de la présente invention.

Les films métallisés obtenus dans le cadre de l'invention sont particulièrement appropriés à être utilisés à titre de surfaces réfléchissantes, planes ou courbes (surface parabolique ...).

Après métallisation dans des conditions connues, à l'aide des techniques connues comme par exemple l'évaporation sous vide, le placage ionique, la pulvérisation cathodique, avec dépôt d'or, d'argent, de cuivre ou d'aluminium ..., les films composites métallisés, après éventuellement dépôt d'un revêtement protecteur, sont en général fixés à l'aide d'une couche adhésive sur un support approprié. Ces surfaces réfléchissantes fonctionneront donc soit au travers de la couche polymérique transparente, soit à travers une couche de vernis protecteur déposée sur la couche métallisée.

La brillance du film métallisé peut être déterminée à l'aide de toute technique connue comme par exemple à l'aide d'un brillancemètre ou d'un goniophotomètre. Dans ce contexte, on pourra utiliser avantageusement un brillancemètre du docteur LANGE, l'appareil étant étalonné (graduation 100) à l'aide d'un miroir argenté. Les brillances du film métallisé sont mesurées par reflexion lumineuse, soit directement, soit indirectement à travers le film composite lui-même. On constate, pour les films de l'invention, qui l'écart de mesure entre les deux valeurs de brillance (écart de brillance) est inférieur à 15% et souvent inférieur à 10%.

Les films coextrudés de l'invention, métallisés sur une de leurs surfaces et dont l'écart de brillance est inférieur à 15%, constituent également un objet de la présente invention. Ces films possèdent généralement une valeur de brillance supérieur à 120 (norme DIN 67-530).

Les propriétés des films composites de la présente invention, les caractéristiques des charges introduites, les propriétés optiques de brillance sont définies de la manière suivante:

Rugosités

La rugosité d'un film s'exprime généralement au moyen de 2 valeurs:
— une valeur correspondant à la rugosité totale $R_t$
— une valeur correspondant à la rugosité moyenne $R_a$ (également appelée CLA selon les termes anglais "center line average").

La rugosité totale $R_t$ et la rugosité moyenne $R_a$ sont définies et leurs mesures sont décrites dans la norme internationale ISO R 468.

La rugosité totale et mesurée selon la norme internationale à l'aide d'un appareil PERTHEN S.6.P.

La mesure correspond à la moyenne de 10 résultats, les divers facteurs de mesure étant choisis de la manière suivante: valeur de la longueur d'onde limite ou cut-off: 0,08 micromètre; longueur de palpage: 1,5 mm; rayon de courbure du palpeur: 3 micromètres; force d'appui du palpeur: 30 mg.

Pourcentage de lumière dispersée:

Cette mesure caractérise la turbidité des films, elle est effectuée selon la norme ASTM D 100.

Coefficient de friction: $\mu_S$; $\mu_d$

C'est la détermination de la friction film/film mesurée au démarrage (coefficient statique) et en régime (valeur dynamique) quand un film se déplace par rapport à un autre à faible vitesse.

Cette mesure est réalisée suivant la norme 311A British Standard 2782.

Coefficient de friction film/métal: $\mu_k$

Le coefficient $\mu_k$ est mesuré selon une méthode analogue à celle décrite page 11, (paragraphe 3), dans la demande de brevet européen 66 997, avec cependant modification de certains paramètres de mesure, de manière à pouvoir élever la vitesse de défilement (vitesse de défilement: 5 m/minute; angle d'embarrage: 195°C; largeur de bande: 2,5 cm).

Caractéristiques des charges

Diamètre médian en volume

Le diamètre médian en volume est le diamètre sphérique équivalent correspondant à 50% du volume de l'ensemble des particules lu sur la courbe de distribution cumulée reliant le % volumique au diamètre des particules.

Par diamètre équivalent sphérique d'une particule, on entend le diamètre d'une sphère ayant un volume équivalent à celui de la particule.

La courbe de distribution des tailles de particules est établie selon les diverses méthodes décrites dans l'art antérieur et notamment par photométrie sous centrifugation à l'aide de l'appareillage HORIBA/CAPA 500.

Cette méthode permet de mesurer la variation d'absorbance d'une suspension dans laquelle les particules sédimentent en fonction du temps t. Cette absorbance est définie par la relation

$$\text{Ln} \, \frac{Io}{I}$$

et elle est reliée aux caractéristiques de la suspension par la formule:

$$\left[ \text{Ln} \, \frac{Io}{I} \right]_{d_x} = K \, E \, (d_x) \, . \, n(d_x) \, . \, (d_x)^2$$

$I_o$: lumière transmise par le liquide pur

$I$: lumière transmise par la suspension

$K$: constante fonction de la concentration de la suspension et de l'épaisseur de la cellule

$E(d_x)$: coefficient d'extinction (pris égal à 1 quelque soit le diamètre)

$n(d_x)$: nombre de particules de diamètre $d_x$

La vitesse de sédimentation est reliée au diamètre équivalent sphérique des particules par la formule de Stockes.

(cf. ouvrage de T. ALLEN: partcle size measurement Third edition 1981.)

Détermination de la brillance

La brillance est déterminée en mesurant la lumière réfléchie par le film en utilisant un brillancemètre du Dr LANGE, selon la norme DIN 67-530.

Les exemples qui suvent illustrent l'invention.

Exemple 1

On réalise un film composite deux couches de polytéréphtalate d'éthylèneglycol, la couche externe B étant chargée, la couche A ne l'étant pas. Les polymères de polytéréphtalate d'étylèneglycol ont été obtenus par transestérification à partir de téréphtalate de diméthyle et d'éthylèneglycol en utilisant, comme catalyseur d'interéchange, l'acétate de manganèse suivi d'une polycondensation avec comme catalyseur l'antimoine, qui amène la viscosité du polymère à VI = 0,64.

La charge présente dans la couche B au taux pondéral de 0,35% (soit 3500 ppm) est un carbonate de calcium introduit sous forme de suspension glycolique incorporée dans le milieu réactionnel en fin d'interéchange. La répartition granulométrique est caractérisée par le diamètre médian en volume: $\varnothing_V$ médian = 0,7 micromètre (mesuré à l'HORIBA/CAPA 500).

L'épaisseur totale du film est: 12 micromètres

L'épaisseur de la couche (B) est de 0,8 micromètre

Le rapport de l'épaisseur de la couche (B) à la couche (A) est de 7,1%

On obtient ainsi, après un biétirage effectué dans les conditions habituelles (longitudinal puis transversal), un film composite présentant les caractéristiques suivantes:

– pourcentage de lumière dispersée: 0,3

– rugosité $R_t$ = 0,09 micromètre

– rugosité $R_a$ = 0,011 micromètre face externe (B)

– rugosité $R_t$ = 0,05 micromètre

– rugosité $R_a$ = 0,003 micromètre face externe (A)

– coefficient de friction statique $\mu_s$ = 0,53 film/film

– coefficient de friction dynamique $\mu_d$ = 0,38 film/film (couche A/couche B)

– coefficient de friction $\mu_k$ (film/métal) $(\mu_k)_{10}$ = 0,2

– $\Delta\mu_k$ = 15

Ce film est métallisé sous vide à l'aide de vapeur d'aluminium.

La brillance mesurée côté métal est de 132 alors qu'elle est encore de 125 à travers le film; l'écart de brillance est de 5,3%

Contre-exemple 1

Lorsque l'on substitue dans la couche (B) le carbonate de calcium par un autre carbonate de calcium ayant un diamètre moyen de 0,4 micromètre et utilisé en même quantité, on observe les résultats suivants:

– pourcentage de lumière dispersée = 0,3

– $\mu_s$ > 1,5

– $\mu_d$ non mesurable (pulsations)

– $\Delta\mu_k$ = 75

Cet exemple comparatif montre l'influence caractéristique du diamètre médian de la charge.

Exemple 2

Selon le mode opératoire de l'exemple 1, on réalise un film trois couches ayant une épaisseur globale de 23 micromètres. Les deux couches externes de 0,4 micromètre d'épaisseur sont chargées du même carbonate de calcium que dans l'exemple précédent.

– taux pondéral de charge: 0,4% (4000 ppm)

– $\varnothing_V$ médian: 0,7 micromètre

On trouve pour le film

– le rapport de l'épaisseur d'une couche (B) à celle de la couche (B) à celle de la couche A est égal à 1,8%

– pourcentage de lumière dispersée: 0,4

– rugosité des couches (B)

$R_T$ = 0,1 micromètre

$R_a$ = 0,01 micromètre

Les coefficients de frictions sont les suivants:

– $\mu_s$ = 0,6

– $\mu_d$ = 0,5

$-\mu_k = 0,2$

$-\Delta\mu_k = 20$

Le film obtenu a été métallisé comme à l'exemple 1. Les valeurs de brillance sont les suivantes:

Face métallisée: 130

Face non métallisée: 120

L'écart de brillance est de 7,7%

Contre-exemple 2

A titre de contre-exemple, on réalise un film trois couches ayant une épaisseur de 36 micromètres. Les deux couches externes de 1,5 micromètres d'épaisseur sont chargées avec du carbonate de calcium.

– taux pondéral de charge: 0,2% (2000 ppm)

– $\varnothing_v$ médian: 1,7 micromètres

On trouve pour le film

– pourcentage de lumière dispersée: 1,4

– rugosité

$R_T = 0,17$ micromètre

$R_a = 0,011$ micromètre

Les coefficients de frictions sont les suivants:

$-\mu_s = 0,35$

$-\mu_d = 0,26$

$-\mu_k = 0,2$

$-\Delta\mu_k = 0$

Les brillances ont été mesurées sur un film métallisé correspondant.

Face métallisée: 105

Face non métallisée: 85

L'écart de brillance est de 19%

Exemple 3

Comme dans l'exemple 2, on réalise un film trois couches ayant une épaisseur de 100 μm. Les deux couches externes de 0,7 μm d'épaisseur sont chargées du même carbonate de calcium que dans l'exemple 2.

– taux pondéral de charge: 0,15% (1500 ppm)

– $\varnothing_v$ médian: 0,7 micromètre

On trouve pour le film

– le rapport de l'épaisseur d'une couche (B) à celle de la couche A est égal à 0,7%

– pourcentage de lumière dispersée: 0,6

– rugosité des couches (B)

$R_T = 0,11$ micromètre

$R_a = 0,01$ micromètre

Les coefficients de frictions sont les suivants:

$-\mu_s = 0,45$

$-\mu_d = 0,38$

$-\mu_k = 0,2$

$-\Delta\mu_k = 10$

(le $\Delta\mu_k$ a été vérifié sur un film 12 micromètres équivalent, c'est-à-dire ne différant du film de l'exemple 3 que par l'épaisseur de la couche cœur.

Ce film a été métallisé. Les valeurs de brillance sont les suivantes:

Face métallisée: 132

Face non métallisée: 115

L'écart de brillance est de 12,9%

Exemple 4

Comme dans l'exemple 2, on réalise un film trois couches ayant une épaisseur de 175 micromètres. Les deux couches externes de 1,5 micromètres d'épaisseur sont chargées avec du carbonate de calcium.

– taux pondéral de charge: 0,1% (1000 ppm)

– $\varnothing_v$ médian: 0,7 micromètre

On trouve pour le film

– le rapport de l'épaisseur d'une couche (B) à celle de la couche A est égal à 0,8%

– pourcentage de lumière dispersée: 0,8

– rugosité des couches (B)

$R_T$ = 0,10 micromètre

$R_a$ = 0,01 micromètre

Les coefficients de frictions sont les suivants:

— $\mu_s$ = 0,4

— $\mu_d$ = 0,35

— $\mu_k$ = 0,2

— $\Delta\mu_k$ = 20 (mesuré par équivalence)

Les valeurs de brillance ont été effectuées sur le film métallisé:

Face métallisée: 129

Face non métallisée: 113

L'écart de brillance est de 12,4%

## Revendications pour les Etats contractants BE, DE, FR, GB, IT, LU, NL

1. Films composites thermoplastiques polyester transparents étirés, à faible rugosité de surface, constitués par une couche centrale (A) essentiellement non chargée et recouverte, sur au moins une de ses faces, par une couche (B) chargée contenant de fines particules à l'état dispersé, le film étant caractérisé en ce que ladite couche B contient de 0,1 à 1% en poids de particules ayant un diamètre médian en volume compris entre 0,6 et 1,5 $\mu$m et présente une épaisseur au plus égale à 3 micromètres et qu'il possède l'ensemble des propriétés suivantes:

— pourcentage de lumière dispersée < 1

— rugosité totale des faces externes $R_T$ < 0,15

— coefficient de friction film sur film mesuré en régime dynamique et statique tel que:

$\mu_s$ < 0,6 (régime statique)

$\mu_d$ < 0,5 (régime dynamique)

2. Films selon la revendications 1 présentant les caractéristiques suivantes:

pourcentage de lumière dispersée ≤ 0,8

$R_T$ ≤ 0,12

3. Films selon les revendications 1 et 2, ayant une épaisseur x exprimée en micromètre et une valeur de pourcentage de lumière dispersée y satisfaisant aux inéquations suivantes:

$$5 < x < 200$$

$$y < \frac{x}{400} + 0,5$$

4. Films selon la revendication 3, dans lesquels l'épaisseur de la couche (B) est au plus égale à 1,5 micromètres.

5. Films selon les revendications 3 et 4, ayant une épaisseur globale comprise entre 5 et 50 micromètres et dont la couche (B) contient de 0,3 à 1% en poids de charge de diamètre médian en volume, compris entre 0,6 et 1 micromètre.

6. Films selon l'une des revendications précédentes, ayant au moins une couche (B) et tels qu'ils satisfont l'inéquation suivante:

$$\Delta\mu_k = \frac{(\mu_k)_{400} - (\mu_k)_{10}}{(\mu_k)_{10}} \times 100 \leqslant 40$$

$(\mu_k)_{10}$ et $(\mu_k)_{400}$ représentant respectivement les valeurs du coefficient de friction film sur métal après défilement de 10 m et 400 m de bande.

7. Films polyesters selon la revendication 6, dans lesquels le coefficient $\Delta\mu_k$ est au plus égal à 25.

8. Utilisation des films composites selon l'une des revendications 1 à 7 pour l'obtention de films métallisés.

9. Films métallisés obtenus par métallisation, par tout moyen connu, des films composites, selon l'une des revendications 1 à 7.

10. Films métallisés obtenus par métallisation sur une de leurs surfaces d'un film composite tel que défini dans l'une des revendications 1 à 7, et dont l'écart de brillance entre les deux faces est inférieur à 15%.

EP 0 235 057 B1

11. Procédé de préparation de films composites thermoplastiques polyester transparents étirés selon l'une quelconque des revendications 1 à 7, caractérisé en ce qu'on procède à la coextrusion d'un polyester thermoplastique cristallisable contenant moins de 0,01% en poids de charges pour former une couche A amorphe et d'un polyester thermoplastique cristallisable contenant de 0,1 à 1% en poids d'au moins une charge dont les particules ont un diamètre médian en volume compris entre 0,6 et 1,5 micromètres, sous forme d'une couche B amorphe déposée sur au moins une face de la couche A, l'épaisseur de la couche B étant au plus égale à 3 micromètres, puis que l'on procède à l'étirage du film composite amorphe dans au moins une direction et à la thermofixation du film étiré.

12. Procédé selon la revendication 11, caractérisé en ce que les charges introduites dans le polyester constituant la couche B sont prises dans le groupe formé par la silice, les silicoaluminates, le carbonate de calcium, l'oxyde de magnésium, l'alumine, le sulfate de barium et l'oxyde de titane.

13. Procédé selon l'une quelconque des revendications 11 à 12, caractérisé en ce que le polyester destiné à la formation de la couche A est exempt de charge.

14. Procédé selon l'une quelconque des revendications 11 à 13, caractérisé en ce que le film polyester composite amorphe résultant de la coextrusion est étiré selon deux directions orthogonales.

15. Procédé selon l'une quelconque des revendications 11 à 14, caractérisé en ce que le film polyester composite amorphe est étiré d'abord dans le sens transversal puis dans le sens longitudinal.

16. Procédé selon l'une quelconque des revendications 11 à 15, caractérisé en ce que les polyesters cristallisables utilisés pour les couches A et B comportent une pluralité de motifs téréphtalate d'alkylène-glycol.

17. Procédé selon la revendication 16, caractérisé en ce que les polyesters cristallisables comportent au moins 80% en poids de motifs récurrents téréphtalates d'éthylèneglycol.

## Revendications pour les Etats contractants ES et AT

1. Procédé de préparation de films composites thermoplastiques polyester transparents étirés, à faible rugosité de surface, constitués par une couche centrale (A) essentiellement non chargée et recouverte, sur au moins une de ses faces, par une couche (B) chargée contenant de 0,1 à 1% en poids de particules ayant un diamètre médian en volume compris entre 0,6 et 1,5 $\mu m$ et présentant une épaisseur au plus égale à 3 $\mu m$, lesdits films possèdant l'ensemble des propriétés suivantes:
- pourcentage de lumière dispersée < 1
- rugosité totale des faces externes $R_T$ < 0,15
- coefficient de friction film sur film mesuré en régime dynamique et statique tel que:
$\mu_s$ < 0,6 (régime statique)

$\mu_d$ < 0,5 (régime dynamique)

caractérisé en ce que l'on procède à la coextrusion d'un polyester thermoplastique cristallisable contenant moins de 0,01% en poids de charges pour former une couche A amorphe et d'un polyester thermoplastique cristallisable contenant de 0,1 à 1% en poids d'au moins une charge dont les particules ont un diamètre médian en volume compris entre 0,6 et 1,5 micromètres sous forme d'une couche B amorphe, déposée sur au moins une des faces de la couche A, l'épaisseur de la couche B étant au plus égale à 3 micromètres, puis que l'on procède à l'étirage du film composite amorphe dans au moins une direction et à la thermofixation du film étiré.

2. Procédé selon la revendication 1, caractérisé en ce que les charges introduites dans le polyester constituant la couche B sont prises dans le groupe formé par la silice, les silicoaluminates, le carbonate de calcium, l'oxyde de magnésium, l'alumine, le sulfate de barium et l'oxyde de titane.

3. Procédé selon l'une quelconque des revendications 1 à 2 caractérisé en ce que le polyester destiné à la formation de la couche A est exempt de charge.

4. Procédé selon l'une quelconque des revendications 1 à 3, caractérisé en ce que le film polyester composite amorphe résultant de la coextrusion est étiré selon deux directions orthogonales.

5. Procédé selon l'une quelconque des revendications 1 à 4, caractérisé en ce que le film polyester composite amorphe est étiré d'abord dans le sens transversal puis dans le sens longitudinal.

6. Procédé selon l'une quelconque des revendications 1 à 5, caractérisé en ce que les polyesters cristallisables utilisés pour les couches A et B comportent une pluralité de motifs téréphtalate d'alkylènegly-col.

7. Procédé selon la revendication 6, caractérisé en ce que les polyesters cristallisables comportent au moins 80% en poids de motifs récurrents téréphtalates d'éthylèneglycol.

## Patentansprüche für die Vertragsstaaten BE, DE, FR, GB, IT, LU, NL

1. Verstreckte transparente thermoplastische Polyesterverbundfilme mit geringer Oberflächenrauhigkeit, aufgebaut aus einer zentralen Schicht (A), die im wesentlichen trägerlos ist und bedeckt ist auf wenigstens einer ihrer Flächen durch eine Schicht (B) mit Füllstoff, enthaltend feine Teilchen in dispergiertem Zustand, und der Film dadurch gekennzeichnet ist, daß diese Schicht (B) von 0,1 bis 1 Gew.-% Teilchen mit einem mittleren Volumendurchmesser zwischen 0,6 und 1,5 $\mu m$ enthält und eine Dicke höchstens gleich 3 Mikrometer aufweist und daß sie die Gesamtheit der folgenden Eigenschaften besitzt:
– Prozent des gestreuten Lichts < 1
– Gesamtrauhigkeit der äußeren Flächen $R_T < 0,15$
– Reibungskoeffizient Film auf Film, gemessen in dynamischem und statischem Zustand wie:
$\mu_S < 0,6$ (statischer Zustand)
$\mu_d < 0,5$ (dynamischer Zustand)

2. Filme gemäß Anspruch 1, welche die folgenden Charakteristika aufweisen:
Prozent gestreutes Licht $\leq 0,8$
$R_T \leq 0,12$.

3. Filme gemäß den Ansprüchen 1 und 2, mit einer Dicke x, ausgedrückt in Mikrometer und einem Prozentwert gestreutes Licht y, das den folgenden Ungleichungen genügt:

$$5 < x < 200$$

$$y \leq \frac{x}{400} + 0,5$$

4. Filme gemäß Anspruch 3, wobei die Dicke der Schicht (B) höchstens gleich 1,5 Mikrometer ist.

5. Filme gemäß den Ansprüchen 3 und 4, mit einer Gesamtdicke zwischen 5 und 50 Mikrometer und deren Schicht (B) 0,3 bis 1 Gew.-% Füllstoff mit einem mittleren Volumendurchmesser zwischen 0,6 und 1 Mikrometer enthält.

6. Filme gemäß einem der vorhergehenden Ansprüche, mit mindestens einer Schicht (B) und daß sie der folgenden Ungleichung genügen:

$$\Delta\mu_k = \frac{(\mu_k)_{400} - (\mu_k)_{10}}{(\mu_k)_{10}} = 100 \leq 40$$

wobei $(\mu_k)_{10}$ und $(\mu_k)_{400}$ die Werte des Reibungskoeffizienten Film auf Metall nach Abspulen von 10 m und 400 m Bande beträgt.

7. Polyesterfilme gemäß Anspruch 6, worin der Koeffizient $\Delta\mu_k$ höchstens gleich 25 ist.

8. Verwendung der Verbundfilme gemäß einem Ansprüche 1 bis 7, zur Erzielung von metallisierten Filmen.

9. Metallisierte Filme, erhalten durch Metallisierung der Verbundfilme gemäß einem der Ansprüche 1 bis 7 durch jedes bekannte Mittel.

10. Metallisierte Filme, erhalten durch Metallisierung eines Verbundfilms, wie in einem der Ansprüche 1 bis 7 definiert, auf einer seiner Oberflächen und dessen Glanzabweichung zwischen zwei Flächen unterhalb 15% ist.

11. Verfahren zur Herstellung der verstreckten transparenten thermoplastischen Polyesterverbundfilme gemäß einem der Ansprüche 1 bis 7, dadurch gekennzeichnet, daß man die Coextrusion eines kristallisierbaren thermoplastischen Polyester enthaltend weniger als 0,01 Gew.-% Füllstoffe, zur Bildung einer amorphen Schicht A, und eines kristallisierbaren thermoplastischen Polyesters, enhaltend 0,1 bis 1 Gew.-% mindestens eines Füllstoffs, dessen Teilchen einen mittleren Volumendurchmesser zwischen 0,6 und 1,5 Mikrometer haben, in Form einer amorphen Schicht B, die auf wenigstens einer Fläche der Schicht A abgesetzt wird, durchführt, wobei die Dicke der Schicht B höchstens gleich 3 Mikrometer ist, daß man dann das Verstrecken des amorphen Verbundfilms in wenigstens einer Richtung und die Thermofixierung des verstreckten Films durchführt.

12. Verfahren gemäß Anspruch 11, dadurch gekennzeichnet, daß die Füllstoffe, die in den Polyester, der die Schicht B bildet, eingeführt werden, genommen werden aus der Gruppe, gebildet durch Siliciumdioxid, Silikoaluminate, Calciumcarbonat, Magnesiumoxid, Aluminiumoxid, Bariumsulfat und Titanoxid.

13. Verfahren gemäß einem der Ansprüche 11 bis 12, dadurch gekennzeichnet, daß der zur Bildung der Schicht A bestimmte Polyester keinen Füllstoff enthält.

14. Verfahren gemäß einem der Ansprüche 11 bis 13, dadurch gekennzeichnet, daß der amorphe Polyesterverbundfilm, der von der Coextrusion resultiert, nach zwei orthogonalen Richtungen verstreckt wird.

15. Verfahren gemäß einem der Ansprüche 11 bis 14, dadurch gekennzeichnet, daß der amorphe Polyesterverbundfilm zunächst in Querrichtung und dann in Längsrichtung verstreckt wird.

16. Verfahren gemäß einem der Ansprüche 11 bis 15, dadurch gekennzeichnet, daß die kristallisierbaren Polyester, die für die Schichten A und B verwendet werden, eine Vielzahl von Alkylenglykolterephthalatgruppierungen enthalten.

17. Verfahren gemäß Anspruch 16, dadurch gekennzeichnet, daß die kristallisierbaren Polyester mindestens 80 Gew.-% wiederkehrender Ethylenglykolterephthalatgruppierungen enthalten.

## Patentansprüche für die Vertragsstaaten ES, AT

1. Verfahren zur Herstellung von verstreckten transparenten thermoplastischen Polyesterverbundfilmen mit geringer Oberflächenrauhigkeit, bestehend aus einer zentralen Schicht (A), die im wesentlichen trägerlos ist und bedeckt ist auf wenigstens einer ihrer Flächen mit einer mit Beladung versehenen Schicht (B), enthaltend 0,1 bis 1 Gew.-% Teilchen, mit einem mittleren Volumendurchmesser zwischen 0,6 und 1,5 μm und mit einer Dicke höchstens gleich 3 μm, wobei diese Filme die Gesamtheit der folgenden Eigenschaften besitzen:
   – Prozent des gestreuten Lichts < 1
   – Gesamtrauhigkeit der äußeren Flächen $R_T$ < 0,15
   – Reibungskoeffizient Film auf Film, gemessen in dynamischem und statischem Zustand wie:
   $\mu_s$ < 0,6 (statischer Zustand)
   $\mu_d$ < 0,5 (dynamischer Zustand)
dadurch gekennzeichnet, daß man die Coextrusion eines kristallisierbaren thermoplastischen Polyesters, enthaltend weniger als 0,01 Gew.-% Füllstoff, zur Bildung einer amorphen Schicht A und eines kristallisierbaren thermoplastischen Polyesters, enthaltend 0,1 bis 1 Gew.-% mindestens eines Füllstoffs, dessen Teilchen einen mittleren Volumendurchmesser zwischen 0,6 und 1,5 μm haben, in Form einer amorphen Schicht B, die auf wenigstens einer der Flächen der Schicht A abgelagert ist, durchführt, wobei die Dicke der Schicht B höchstens gleich 3 Mikrometer ist, daß man dann das Verstrecken des amorphen Verbundfilms in wenigstens einer Richtung und die Thermofixierung des verstreckten Films durchführt.

2. Verfahren gemäß Anspruch 1, dadurch gekennzeichnet, daß die in den Polyester, der die Schicht B bildet, eingeführten Füllstoffe ausgewählt sind aus der Gruppe, gebildet durch Siliciumdioxid, Silikoaluminate, Calciumcarbonat, Magnesiumoxid, Aluminiumoxid, Bariumsulfat und Titanoxid.

3. Verfahren gemäß einem der Ansprüche 1 bis 2, dadurch gekennzeichnet, daß der zur Bildung der Schicht A vorgesehene Polyester frei von Füllstoff ist.

4. Verfahren gemäß einem der Ansprüche 1 bis 3, dadurch gekennzeichnet, daß der amorphe Verbundpolyesterfilm, der von der Coextrusion resultiert, nach zwei orthogonalen Richtungen verstreckt wird.

5. Verfahren gemäß einem der Ansprüche 1 bis 4, dadurch gekennzeichnet, daß der amorphe Verbundpolyesterfilm zunächst in Querrichtung und dann in Längsrichtung verstreckt wird.

6. Verfahren gemäß einem der Ansprüche 1 bis 5, dadurch gekennzeichnet, daß die kristallisierbaren Polyester, die für die Schichten A und B verwendet werden, eine Vielzahl von Alkylenglycolterephthallatgruppierungen enthalten.

7. Verfahren gemäß Anspruch 6, dadurch gekennzeichnet, daß die kristallisierbaren Polyester mindestens 80 Gew.-% wiederkehrender Ethylenglykolterephthalatgruppierungen enthalten.

## Claims for the Contracting States BE, DE, FR, GB, IT, LU, NL

1. Draw transparent polyester thermoplastic composite films with low surface roughness, which consist of an essentially unfilled central layer (A) coated on at least one of its faces with a filled layer (B) containing fine particles in the dispersed state, the film being characterized in that the said layer B contains from 0.1 to 1% by weight of particles which have a volume median diameter of between 0.6 and 1.5 μm and has a thickness not exceeding 3 micrometres and in that it combines the following properties:
   – percentage of scattered light < 1
   – total roughness of the outer faces $R_T$ 0.15
   – film-on-film friction coefficient measured in a dynamic and static regime such that: .
   $\mu_s$ < 0.6 (static regime)
   $\mu_d$ < 0.5 (dynamic regime)

2. Films according to Claim 1 exhibiting the following characteristics:
percentage of scattered light $\leq$ 0.8
$R_T \leq 0.12$.

3. Films according to Claims 1 and 2, which have a thickness x, expressed in micrometres, and a value of the percentage of scattered light y satisfying the following inequalities:

$$5 < x < 200$$

$$y \leqslant \frac{x}{400} + 0,5$$

4. Films according to Claim 3 in which the thickness of the layer (B) does not exceed 1.5 micrometres.

5. Films according to Claims 3 and 4, which have a total thickness of between 5 and 50 micrometres and in which the layer (B) contains from 0.3 to 1% by weight of filler, with a volume median diameter of between 0.6 and 1 micrometre.

6. Films according to one of the preceding claims which have at least one layer (B) and such that they satisfy the following inequality:

$$\Delta\mu_k = \frac{(\mu_k)_{400} - (\mu_k)_{10}}{(\mu_k)_{10}} \times 100 \leqslant 40$$

$(\mu_k)_{10}$ and $(\mu_k)_{400}$ denoting the values of the film-on-metal friction coefficient after the passage of 10 m and 400 m of tape respectively.

7. Polyester films according to Claim 6, in which the coefficient $\Delta\mu_k$ does not exceed 25.

8. Use of the composite films according to one of Claims 1 to 7 to obtain metallized films.

9. Metallized films obtained by metallizing, by any known means, composite films according to one of Claims 1 to 7.

10. Metallized films obtained by metallizing on one of their surfaces of a composite film such as are defined in one of Claims 1 to 7, and whose gloss difference between the two faces is smaller than 15%.

11. The process for the preparation of drawn transparent polyester thermoplastic films according to any one of Claims 1 to 7, characterized by performing the coextrusion of a crystallizable thermoplastic polyester containing less than 0.01% by weight of fillers to form an amorphous layer A and of a crystallizable thermoplastic polyester containing from 0.1 to 1% by weight of at least one filler, whose particles have a volume median diameter of between 0.6 and 1.5 micrometres in the form of an amorphous layer B deposited onto at least one face of the layer A, the thickness of the layer B not exceeding 3 micrometres and then drawing the amorphous composite film in at least one direction and heat-setting the drawn film.

12. Process according to Claim 11, characterized in that the fillers introduced into the polyester forming the layer B are taken from the group consisting of silica, silicoaluminates, calcium carbonate, magnesium oxide, alumina, barium sulphate and titanium oxide.

13. Process according to either of Claims 11 to 12 characterized in that the polyester intended to form the layer A is free from filler.

14. Process according to any one of Claims 11 to 13, characterized in that the amorphous composite polyester film resulting from the coextrusion is drawn in two directions at right angles.

15. Process according to any one of Claims 11 to 14, characterized in that the amorphous composite polyester film is drawn first in the transverse direction and then in the lengthwise direction.

16. The process according to any one of Claims 11 to 15, characterized in that the crystallizable polyesters employed for the layers A and B contain a plurality of alkylene glycol terephthalate units.

17. Process according to Claim 16, characterized in that the crystallizable polyesters contain at least 80% by weight of ethylene glycol terephthalate repeat units.

**Claims for the Contracting States ES, AT**

1. Process for the preparation of drawn transparent polyester thermoplastic composite films with low surface roughness, which consist of an essentially unfilled central layer (A) coated on at least one of its faces with a filled layer (B) containing from 0.1 to 1% by weight of particles which have a volume median diameter of between 0.6 and 1.5 $\mu$m and which has a thickness not exceeding 3 $\mu$m, the said films combining the following properties:
   – percentage of scattered light < 1
   – total roughness of the outer faces $R_T < 0.15$
   – film-on-film friction coefficient measured in a dynamic and static regime such that:
   $\mu_s < 0.6$ (static regime)
   $\mu_d < 0.5$ (dynamic regime) characterized by performing the coextrusion of a crystallizable thermoplastic polyester containing less than 0.01% by weight of fillers to form an amorphous layer A and of a crystallizable thermoplastic polyester containing from 0.1 to 1% by weight of at least one filler whose particles have a volume median diameter of between 0.6 and 1.5 micrometres in the form of an amorphous layer B deposited onto at least one of the faces of the layer A, the thickness of the layer B not exceeding 3 micrometers, then drawing the amorphous composite film in at least one direction and heat-setting the drawn film.

2. Process according to Claim 1, characterized in that the fillers introduced into the polyester forming the layer B are taken from the group consisting of silica, silicoaluminates, calcium carbonate, magnesium oxide, alumina, barium sulphate and titanium oxide.

3. Process according to either of Claims 1 to 2, characterized in that the polyester intended to form the layer A is free from filler.

4. Process according to any one of Claims 1 to 3, characterized in that the amorphous composite polyester film resulting from the coextrusion is drawn in two directions at right angles.

5. Process according to any one of Claims 1 to 4, characterised in that the amorphous composite polyester film is drawn first in the transverse direction and then in the lengthwise direction.

6. Process according to any one of Claims 1 to 5, characterized in that the crystallizable polyesters employed for the layers A and B contain a plurality of alkylene glycol terephthalate units.

7. Process according to Claim 6, characterized in that the crystallizable polyesters contain at least 80% by weight of ethylene glycol terephthalate repeat units.